# NOUVEAU FASCICULE DE BREVET EUROPEEN

(11) **EP 0 918 629 B2**
(45) Date de publication et mention de la décision concernant l'opposition: **09.05.2012**
(45) Mention de la délivrance du brevet: 13.10.2004
(21) Numéro de dépôt: 98932221.9
(22) Date de dépôt: 17.06.1998
(51) Int. Cl.: B32B 17/10, C03C 27/12, F41H 5/04

(54) **VITRAGE BLINDE, NOTAMMENT LATERAL FIXE OU MOBILE POUR VEHICULE AUTOMOBILE**
Panzerverglasung, insbesondere feste oder bewegliche Seitenscheiben f³r Kraftfahrzeuge
ARMOURED GLAZING, IN PARTICULAR FOR VEHICLE FIXED OR MOBILE SIDE GLAZING

(30) Priorité: 18.06.1997 FR 9707561
(43) Date de publication de la demande: 02.06.1999
(73) Titulaire: SAINT-GOBAIN GLASS FRANCE, 92400 Courbevoie (FR)
(72) Inventeur: GOURIO, Noel, F-45600 Orleans (FR)
(74) Mandataire: Muller, René
(86) Numéro de dépôt international: PCT/FR1998/001269
(87) Numéro de publication internationale: WO 1998/057805

(56) Documents cités:
- EP-A1- 0 658 738
- WO-A2-97/07377
- DE-A- 19 539 607
- DE-C2- 3 243 136
- DE-C2- 4 415 879
- DE-U1- 7 739 670
- FR-A1- 2 612 174
- FR-A1- 2 720 029
- GB-A- 708 242
- US-A- 2 298 874
- US-A- 2 382 956
- US-A- 2 464 540
- US-A- 2 567 353
- US-A- 3 307 999
- US-A- 3 974 359
- US-A- 4 277 294
- US-A- 5 270 518
- 4 ÈME ÉD.: 'Ullmanns Encyclopädie der Technischen Chemie', vol. 8, 1974, VERLAG CHEMIE, WEINHEIM page 331

## Description

La présente invention est relative à un vitrage feuilleté blindé pare-balles, pouvant être mis en oeuvre pour la protection de bâtiments ou de véhicules blindés tels que véhicules particuliers, véhicules militaires ou pour le transport de fonds. Ce type de vitrage est susceptible d'être monté sur des véhicules de transport routier, ferroviaire, maritime ou aérien.

D'importants efforts ont été accomplis en vue d'améliorer la résistance des vitrages blindés, notamment vis-à-vis de balles de plus en plus lourdes et d'impacts de plus en plus puissants et concentrés sur une faible surface.

Plusieurs approches s'offraient aux inventeurs pour améliorer les performances balistiques de ces vitrages.

En particulier, quelques solutions ont été proposées pour améliorer la fixation de pare-brise d'avions. Ceux-ci n'ont pas à résister à des impacts de balles, mais seulement aux oiseaux susceptibles de les heurter et ont, à ce titre, une structure différente par la nature des constituants du feuilleté et plus fine que celle des vitrages blindés dont il est à présent question.

Ainsi, le brevet US-A-3 953 630 décrit un pare-brise d'avion comportant un insert flexible à résistance mécanique élevée, constitué d'une bande de tissu de fibres de verre imprégnées de caoutchouc, ou encore de fibres polyester ou de fils en acier inoxydable. Cet insert s'étend au-delà de la périphérie du pare-brise et son extrémité émergente est rigidifiée pour être boulonnée à la carrosserie de l'avion.

La demande FR-A1-2 612 174 a trait à un pare-brise d'avion constitué de deux feuilles de polycarbonate prenant en sandwich une couche intercalaire molle en polyuréthane. Du fait de la faible rigidité de l'ensemble ainsi constitué, il n'est pas possible d'envisager un montage identique à celui d'un pare-brise en verre, par simple pincement dans la feuillure, sans risquer une éjection du pare-brise due aux déformations importantes du polycarbonate. Le document rend néanmoins possible un tel montage, en proposant de noyer dans la périphérie de la couche intercalaire une ceinture rigide, par exemple métallique, à fleur de chant du pare-brise.

Une ceinture rigide comparable, destinée à un vitrage pour cabine de pilotage pressurisée d'avion, comprenant deux feuilles de verre et une couche intercalaire en matière plastique, est également divulguée par la demande de brevet FR-A1-2 720 029. Cette ceinture, également noyée dans la périphérie de la couche intercalaire, ne déborde de la périphérie du vitrage, éventuellement que pour en recouvrir le chant en partie ou en totalité, la ceinture ayant alors un profil correspondant en L, respectivement en T.

Selon une autre approche, le brevet US-A-2 991 207 décrit un pare-brise d'avion à résistance améliorée aux impacts d'oiseaux constitué de deux feuilles de verre et d'une couche molle intercalaire en polyvinylbutyral. Cette dernière s'étend au-delà de la périphérie des feuilles de verre ; une pièce de renforcement, noyée dans la couche molle, s'étend du bord émergent de celle-ci jusqu'à l'intérieur du feuilleté, c'est-à-dire entre les feuilles de verre.

De manière surprenante, les inventeurs se sont aperçu que la transposition aux vitrage blindés des techniques décrites précédemment relativement aux pare-brise d'avions, dans les conditions précises de l'invention telles que définies ci-dessous, était susceptible d'améliorer leur résistance aux impacts de balles ou autres projectiles d'armes à feu et d'assurer leur maintien dans les feuillures après le premier impact.

Cet objectif a pu être atteint par l'invention qui a pour objet un vitrage feuilleté blindé pare-balles tel que défini dans la présente revendication 1.

De préférence, lesdites excroissances rigides sont dans le prolongement d'une unique feuille constitutive du vitrage ou d'un unique groupe de telles feuilles adjacentes. En d'autres termes, les excroissances sont situées sensiblement en alignement en une unique position par rapport à l'épaisseur du vitrage.

Cette caractéristique facilite la construction des châssis de fenêtres ou des carrosseries associés, en autorisant l'insertion des excroissances dans une unique feuillure régulière.

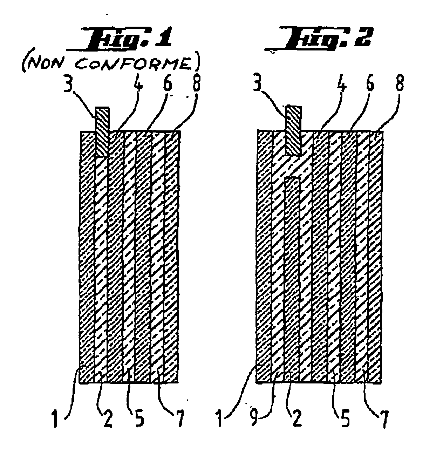

D'autres caractéristiques et avantages de l'invention apparaîtront à la lumière de la description qui suit des dessins annexés, dans lesquels les figures 1 à 2 sont respectivement des représentations schématiques d'un vitrage feuilleté non conforme à l'invention et d'un vitrage feuilleté conforme à l'invention.

Le vitrage de la figure 1 est constitué, de l'extérieur - c'est-à-dire du côté par lequel l'impact est susceptible de se produire - vers l'intérieur :
- d'une feuille de vitrocéramique 1 de 6 mm d'épaisseur,
- d'une couche adhésive intercalaire 2 de polyvinylbutyral (PVB) de 3 mm d'épaisseur,
- d'une feuille de verre 4,
- d'une couche adhésive intercalaire 5 de PVB,
- d'une feuille de verre 6,
- d'une couche adhésive intercalaire 7 de polyuréthane (PU), et
- d'une feuille 8 de polycarbonate (PC) dont la face intérieure est en général revêtue d'un vernis anti-rayures, par exemple à base de polysiloxane, sur une épaisseur tout au plus égale à 15 µm, mais plus souvent de l'ordre de 2 à 7 µm.

La feuille 8 est également revêtue, en totalité ou en partie, le cas échéant, d'une couche colorante notamment suivant une bande horizontale supérieure, ou de toute autre couche fonctionnelle habituellement appliquée sur la face intérieure de pare-brise.

La structure stratifiée de blindage, constituée des feuilles et couches 4, 5, 6, 7 et 8 a une épaisseur comprise approximativement entre 30 et 40 mm. Il est d'autre part envisageable d'intercaler, entre la feuille 6 et la couche 7, successivement de la première vers la seconde, un ou plusieurs empilements constitués, dans l'ordre, d'une couche de PVB puis d'une feuille de verre. L'épaisseur du vitrage en est augmentée d'autant ; de préférence, le nombre de feuilles de verre comprises dans cet empilement de feuilles de verre et de couches de PVB alternées, à feuilles de verre extérieures, n'excédera pas 4 tout au plus, ou en particulier 3.

Dans l'application pare-balles de l'invention, on évite l'utilisation de verre trempé, c'est-à-dire ayant été soumis à un traitement de trempe thermique, en raison de sa tendance à se fragmenter en nombreux éclats de petite taille dès le premier impact de balle. Les feuilles de verre sont ici constituées de verre recuit ou de verre renforcé chimiquement qui, avantageusement, ne sont endommagés que localement après avoir subi un impact de balle.

La feuille 1 extérieure du vitrage pourrait également être constituée de verre recuit ou de verre renforcé chimiquement, son épaisseur étant équivalente à celle de la feuille de vitrocéramique 1 de la figure 1.

Toutes les feuilles et couches constituant le vitrage sont, bien entendu, transparentes.

Selon les modes de réalisation représentés en figures 1 et 2, l'une au moins des excroissances est constituée par un insert métallique 3 en acier inoxydable s'enfonçant dans le vitrage feuilleté d'une profondeur approximative d'une quinzaine de millimètres et en émergeant environ d'autant.

Conformément à la figure 1 non conforme à l'invention, l'insert 3 est situé dans le prolongement de la couche 2 ; son épaisseur est également de 3 mm.

La figure 2 conforme à l'invention représente une réalisation dans laquelle l'insert 3, identique à celui qui vient d'être décrit, est situé dans le prolongement d'une feuille 2 en vitrocéramique ou, éventuellement, en verre recuit ou renforcé chimiquement. L'insert 3 émerge également de la structure feuilletée d'une quinzaine de millimètres.

L'insert 3 n'est cependant pas ici représenté en contact direct avec la feuille 2 en vitrocéramique ou en verre, mais légèrement disjoint. L'insert 3 et la feuille 2 étant noyés partiellement pour l'un, et presque en totalité pour l'autre, dans une couche adhésive 9 en PVB, celui-ci sera susceptible de fluer au cours de la fabrication du vitrage, y compris dans l'espace laissé libre entre l'insert 3 et la feuille 2. Il est cependant possible de limiter cet espace libre jusqu'à le supprimer, la couche adhésive 9 étant alors remplacée par deux couches indépendantes. A titre de comparaison, on remarque que le fluage du PVB de la couche 2 de la figure 1 est limité par une face de la feuille 1, le chant de l'insert 3 et une face de la feuille 4, éventuellement à de mineures et négligeables infiltrations près, au niveau des interfaces feuille 1-insert 3 et insert 3-feuille 4.

Bien que les vitrages pare-balles de l'invention conviennent pour le bâtiment comme pour tous véhicules de transport, les vitrages de véhicules de transport routier, et notamment les vitrages latéraux fixes, ou en particulier mobiles, de véhicules particuliers blindés, sont particulièrement visés.

Avantageusement, la ou les excroissances rigides ont une épaisseur équivalente à celle d'un vitrage classique de véhicule automobile, et sont ainsi commodément introduites dans la feuillure en lieu et place d'un vitrage classique.

Dans le cas d'un vitrage mobile, en général dans la direction verticale, le problème de rayabilité d'une excroissance en verre renforcé chimiquement, nécessitant son enrobage ou son encapsulation, provient justement de ces mouvements de va-et-vient, engendrant des frottements dans la feuillure.

Selon une autre caractéristique avantageuse, la face extérieure du vitrage est rigoureusement située dans la continuité de la carrosserie. Les caractéristiques aérodynamiques du véhicule s'en trouvent améliorées, de manière connue, par diminution de son coefficient de pénétration dans l'air.

Le vitrage de l'invention se distingue particulièrement en ce sens que le maintien du vitrage dans la feuillure continue d'être assuré, dans une large mesure, après le premier impact, de telle sorte qu'une résistance à un second impact, voire à un impact ultérieur, peut être obtenue, selon les structures feuilletées mises en oeuvre, la nature des projectiles et la puissance du tir. Par rapport aux vitrages blindés connus, celui de l'invention résiste à des projectiles plus lourds, à des impacts plus puissants et plus nombreux, qu'ils soient simultanés ou consécutifs.

## Revendications

1. Vitrage feuilleté blindé pare-balles comportant, sur au moins une partie de sa périphérie, une ou plusieurs excroissances rigides, chacune de celles-ci appartenant sensiblement à un plan parallèle à la surface définie par le vitrage ou au prolongement de cette surface, et ayant une épaisseur lui permettant d'être introduite au moins en partie, temporairement ou à demeuré, dans la feuillure de la baie du vitrage, **caractérisé en ce que** ladite ou l'une au moins desdites excroissances est constituée par un insert (3) notamment métallique chaque fois positionné en partie à l'intérieur de la structure feuilletée constituant le vitrage, dans le prolongement d'une ou plusieurs feuilles adjacentes (2) constitutives de celui-ci en verre ou vitrocéramique.

2. Vitrage selon la revendication 1, **caractérisé en ce que** lesdites excroissances rigides sont dans le prolongement d'une unique feuille constitutive du vitrage ou d'un unique groupe de telles feuilles adjacentes.

3. Vitrage selon l'une quelconque des revendications 1 à 2, **caractérisé en ce que** le vitrage présente une première face, susceptible d'être heurtée en premier lieu par un projectile, qui est constituée par une feuille de verre ou vitrocéramique (1).

4. Vitrage selon la revendication 3, **caractérisé en ce que** le vitrage comprend successivement, à partir de ladite ou desdites excroissances et en s'éloignant de ladite première face un empilement de feuilles de verre (4, 6) et de couches adhésives (5) de polyvinylbutyral (PVB) en alternance, à feuilles de verre (4, 6) extérieures, puis une feuille intercalaire (7) de polyuréthane (PU), puis une feuille (8) de polycarbonate (PC) en général revêtue d'un vernis dur anti-rayures et constituant la deuxième face du vitrage.

5. Vitrage selon l'une quelconque des revendications 1 à 4 pour un véhicule de transport, **caractérisé en ce que** la ou les excroissances rigides que le vitrage comporte ont une épaisseur équivalente à celle d'un vitrage classique de véhicule de transport.

6. Vitrage selon la revendication 5, **caractérisé en ce que** ladite première face est positionnée dans la continuité de la carrosserie.

7. Vitrage selon la revendication 5 ou 6 comme vitrage automobile latéral fixe ou mobile dans la direction verticale ou horizontale.

## Claims

1. Bulletproof laminated armoured glazing comprising, over at least part of its periphery, one or more rigid protrusions each of which substantially belongs to a plane parallel to the surface defined by the glazing or to the continuation of this surface, and has a thickness that allows it to be inserted at least in part, either temporarily or permanently, in the rebate of the opening designed to accept the glazing, **characterized in that** the said or at least one of the said protrusions consists of an insert (3), notably a metallic insert, each one positioned partly within the laminated structure that makes up the glazing, in the continuation of one or more adjacent constituent sheets (2) thereof which are made of glass or vitreous ceramic.

2. Glazing according to Claim 1, **characterized in that** the said rigid protrusions are in the continuation of one single sheet that makes up the glazing or one single group of such adjacent sheets.

3. Glazing according to either one of Claims 1 and 2, **characterized in that** the glazing has a first side, designed to be the first side struck by a projectile, which consists of a sheet of glass or vitreous ceramic (1).

4. Glazing according to Claim 3, **characterized in that** the glazing comprises in succession, from the said protrusion or protrusions and working away from the said first side, a stack of glass sheets (4, 6) and of adhesive layers (5) of polyvinyl butyral (PVB) in an alternating succession, with external glass sheets (4, 6), then an interlayer (7) of polyurethane (PU), then a sheet (8) of polycarbonate (PC), generally coated with a scratch-resistant tough lacquer and constituting the second side of the glazing.

5. Glazing according to any one of Claims 1 to 4 for a transport vehicle, **characterized in that** the rigid protrusion or protrusions that the glazing comprises are of a thickness equivalent to that of a conventional piece of glazing for a transport vehicle.

6. Glazing according to Claim 5, **characterized in that** the said first side is positioned in continuity with the bodywork.

7. Glazing according to Claim 5 or 6, by way of fixed or vertically or horizontally mobile automotive vehicle side window glazing.

## Patentansprüche

1. Verbundpanzerglas, das durchschusshemmend ist und auf mindestens einem Teil seines Umfangs eine oder mehrere starre Ausformungen umfasst, die jeweils im Wesentlichen zu einer Ebene, die parallel zu der von dem Glas definierten Oberfläche verläuft, oder zur Verlängerung dieser Oberfläche gehören und eine Dicke besitzen, die es ihnen erlaubt, vorübergehend oder bleibend wenigstens teilweise in den Falz der Öffnung für die Verglasung eingefügt zu werden, **dadurch gekennzeichnet, dass** die oder mindestens eine der Ausformungen aus einer insbesondere metallischen Einfügung (3) besteht, die jedes Mal teilweise in der das Glas bildenden Verbundstruktur in Verlängerung einer oder mehrerer es bildender, aneinander angrenzender Scheiben/Folien (2) aus Glas oder Vitrokeramik angeordnet wird.

2. Glas nach Anspruch 1, **dadurch gekennzeichnet, dass** die starren Ausformungen sich in Verlängerung einer einzigen konstituierenden Scheibe/Folie des Glases oder einer einzigen Gruppe aus solchen aneinander angrenzenden Scheiben/Folien befinden.

3. Glas nach einem der Ansprüche 1 bis 2, **dadurch gekennzeichnet, dass** das Glas eine erste Seite besitzt, die zuerst von einem Geschoss getroffen werden kann und aus einer Glas- oder Vitrokeramikscheibe (1) besteht.

4. Glas nach Anspruch 3, **dadurch gekennzeichnet, dass** das Glas nacheinander ab der/den Ausformung/en und sich ab der ersten Seite erstreckend einen abwechselnden Aufbau aus Glasscheiben (4, 6) und haftfähigen Schichten (5) aus Polyvinylbutyral (PVB) mit äußeren Glasscheiben (4, 6), anschließend einer Zwischenfolie (7) aus Polyurethan (PU) und anschliessend einer Folie (8) aus Polycarbonat (PC), die im Allgemeinen mit einem kratzfesten harten Lack beschichtet ist und die zweite Seite des Glases bildet, umfasst.

5. Glas nach einem der Ansprüche 1 bis 6 für ein Transportfahrzeug, **dadurch gekennzeichnet, dass** die starre/n Ausformung/en, die das Glas umfasst, eine Dicke besitzen, die gleich der einer herkömmlichen Verglasung für das Transportfahrzeug ist.

6. Glas nach Anspruch 5, **dadurch gekennzeichnet, dass** dessen erste Seite in ununterbrochener Fortsetzung der Karosserie angeordnet ist.

7. Glas nach Anspruch 5 oder 6 als Seitenscheibe eines Kraftfahrzeugs die feststehend oder in vertikaler bzw. horizontaler Richtung beweglich ist.
